# EUROPÄISCHE PATENTSCHRIFT

(11) **EP 0 985 597 B1**
(45) Veröffentlichungstag und Bekanntmachung des Hinweises auf die Patenterteilung: **17.11.2004**
(21) Anmeldenummer: 99115206.7
(22) Anmeldetag: 31.07.1999
(51) Int. Cl.: B62J 1/10

(54) **Motorrad mit eienm schwenkbaren Sitz**
Motorcycle with a tiltable seat
Motocyclette avec siège basculable

(30) Priorität: 11.09.1998 DE 19841749
(43) Veröffentlichungstag der Anmeldung: 15.03.2000
(73) Patentinhaber: Bayerische Motoren Werke Aktiengesellschaft, 80809 München (DE)
(72) Erfinder: Abe, Karl Heinz, 86916 Kaufering (DE); Krams, Peter, 10020 Pecetto To.Se-To (IT); Sievers-Paulsen, Johann, 85354 Freising (DE)

(56) Entgegenhaltungen:
- EP-A- 0 751 062
- US-A- 4 413 700
- US-A- 4 563 038
- US-A- 5 107 949

## Beschreibung

Die Erfindung betrifft ein Motorrad mit einem schwenkbaren Sitz gemäß dem Oberbegriff des Hauptanspruches 1.

Ein derartiges Motorrad ist aus der US 4 563 038 bekannt.

Die DE 30 26 789 C2 beschreibt ein solches Motorrad, bei dem zum Zweck der besseren Zugänglichkeit von Motor und Fahrwerk eine Sitzstütze mit einem Fahrersitz und ein Kraftstofftank jeweils um eine, in Fahrtrichtung gesehen, in deren vorderem Bereich angebrachte Scharnierachse hochschwenkbar am Motorrad befestigt sind. Es ist allerdings nicht beschrieben, durch welche Mittel die hochgeschwenkte Sitzeinrichtung in der nach oben geschwenkten Lage gehalten wird. Außerdem ist nicht beschrieben, welche weiteren Befestigungseinrichtungen, außer dem Scharnier, für die Sitzeinrichtung zur Abstützung vorgesehen sind.

Aufgabe dieser Erfindung ist es, ein Motorrad mit einer Sitzeinrichtung bereitzustellen, von der mindestens ein Sitz hochklappbar ausgebildet ist und in seiner hochgeklappten Position durch die Sitzeinrichtung gehalten wird. Außerdem soll der Sitz in seiner Gebrauchsstellung zuverlässig fahrzeugfest angebracht sein.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist ein Motorrad mit einer Sitzeinrichtung, mindestens für einen Fahrer, von der mindestens eine Sitzschale mit einem an dieser Sitzschale angebrachten Sitzpolster einen Sitz bildet, der über ein Scharnier hochschwenkbar und über eine Verriegelungseinrichtung in Gebrauchsstellung fixierbar, fahrzeugfest angebracht ist, dadurch gekennzeichnet, daß der hochschwenkbare Sitz über eine Halteeinrichtung, die auch das Scharnier bildet, am Motorrad befestigt ist und daß die Halteeinrichtung eine Gasdruckfeder umfaßt, durch die der Sitz in hochgeschwenkter Position gehalten wird. Dabei kann ein Anschlag die Position bestimmen, in die der Sitz hochgeschwenkt werden kann.

Das hat den Vorteil, daß der hochschwenkbare Sitz über die Halteeinrichtung zuverlässig fahrzeugfest abgestützt und fixiert werden kann, desweiteren in hochgeschwenkter Position über die Gasdruckfeder so abgestützt wird, daß er diese Position beibehält.

In einer vorteilhaften Ausführung der Erfindung ist die Sitzeinrichtung für einen Fahrer und einen Sozius ausgebildet und der Sitz für den Fahrer über das Scharnier hochschwenkbar am Motorrad befestigt, wobei der Sitz um eine Scharnierachse geschwenkt wird, die, in Fahrtrichtung gesehen, im wesentlichen im vorderen Bereich unterhalb des Sitzes an der Halteeinrichtung angebracht ist.

Zusätzlich ist die Verriegelungseinrichtung, in Fahrtrichtung gesehen, im wesentlichen unterhalb des hinteren Bereichs des Sitzes fahrzeugfest angebracht.

Eine solche Gestaltung eines hochschwenkbaren Fahrersitzes hat den Vorteil, daß sie sehr einfach aufgebaut ist und preiswert herzustellen ist. Dazu kann sie noch in einer weiteren vorteilhaften Ausführung der Erfindung mit einer Höhenverstelleinrichtung für den Sitz versehen werden, die ein am Sitz angebrachtes Verstellelement umfaßt, durch das ein unterschiedlich großer Abstand zwischen Sitz und einer an einem Motorradheckrahmen angebrachten Verstellelementauflage in Gebrauchsstellung des Sitzes festgelegt werden kann. Eine solche Höhenverstelleinrichtung ist besonders einfach aufgebaut und preiswert herzustellen, wenn durch das Verstellelement für mindestens zwei verschiedene Sitzpositionen mindestens zwei unterschiedlich große Abstände zwischen Sitz und Motorradheckrahmen in Gebrauchsstellung des Sitzes festgelegt werden können und wenn am Sitz für jede Sitzposition jeweils ein Haltebügel angebracht ist, zum Eingriff eines Schloßhakens der Verriegelungseinrichtung.

Bei einer bevorzugten Ausführung der Erfindung wird die Verriegelungseinrichtung für den Sitz über eine Betätigungseinrichtung zum Entriegeln betätigt und Verriegelungseinrichtung und Betätigungseinrichtung sind durch einen Bowdenzug miteinander verbunden.

Diese einfache Ausführung zum Entriegeln des Sitzes hat den Vorteil, daß die Betätigungseinrichtung an irgendeiner gut zugänglichen Stelle am Motorrad angebracht werden kann. Vorteilhafterweise wird bei einer weiteren bevorzugten Ausführung der Erfindung keine abschließbare Betätigungseinrichtung benötigt, wenn die Betätigungseinrichtung in einem Motorradkoffer untergebracht ist, der fest am Fahrzeug angebracht ist. Nach dem Öffnen des Motorradkoffers ist dann die Betätigungseinrichtung zum Entriegeln des Sitzes zugänglich.

Ein bevorzugtes Ausführungsbeispiel der Erfindung ist in der nachfolgenden Beschreibung mit der zugehörigen Zeichnung dargestellt. Es zeigen:
- Figur 1: eine Seitenansicht eines Motorrads mit einer Sitzeinrichtung entsprechend der Erfindung,
- Figur 2: eine räumliche Darstellung einer Halteeinrichtung für einen hochschwenkbaren Sitz entsprechend der Erfindung,
- Figur 3: eine Ansicht der Halteeinrichtung aus Figur 2 mit zusätzlichen, für die Erfindung nicht wesentlichen Konstruktionshilfslinien,
- Figur 4: eine Sitzschale für einen hochschwenkbaren Sitz entsprechend der Erfindung in räumlicher Darstellung,
- Figur 5: ein Verstellelement für die Sitzschale als Teil einer Höhenverstelleinrichtung in räumlicher Darstellung,
- Figur 6: eine Verriegelungseinrichtung für die Sitzschale mit Betätigungseinrichtung zum Entriegeln in räumlicher Darstellung,
- Figur 7: einen Teilschnitt durch den hochschwenkbaren Sitz mit für die Erfindung unwesentlichen Konstruktionshilfslinien und
- Figur 8: einen weiteren Teilschnitt durch den hochschwenkbaren Sitz im Bereich der Höhenverstelleinrichtung, ebenfalls mit für die Erfindung unwesentlichen Konstruktionshilfslinien.

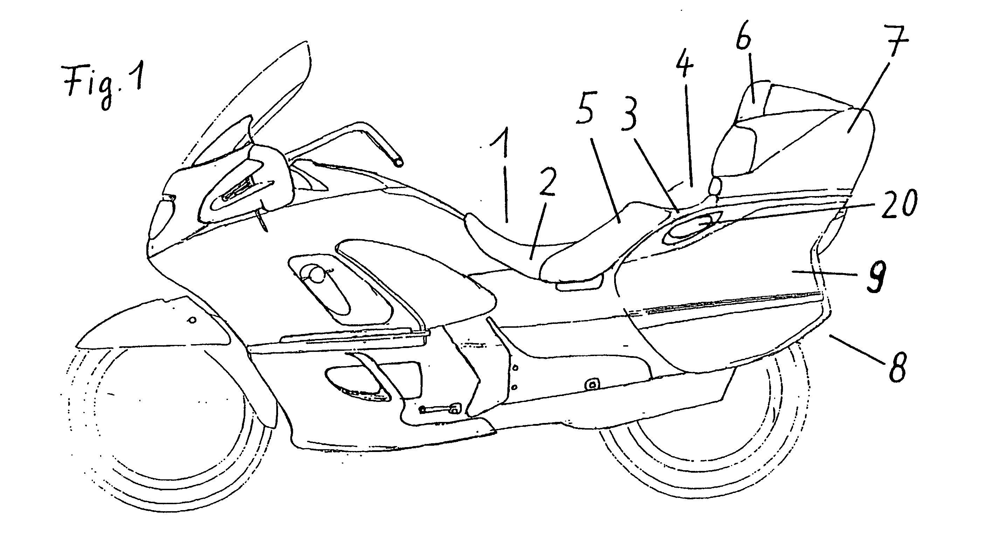

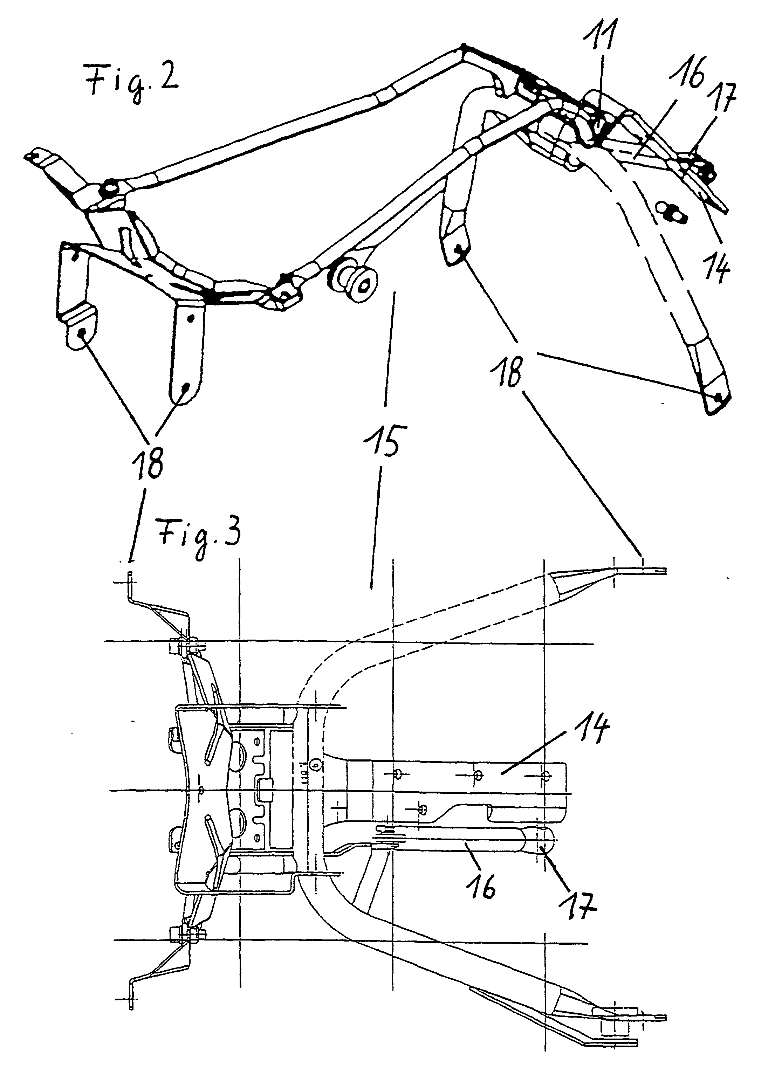

Figur 1 zeigt eine Seitenansicht eines Motorrads mit einer Sitzeinrichtung für einen nicht gezeichneten Fahrer und einen nicht gezeichneten Sozius. Ein Fahrersitz 1, von dem nur ein Sitzpolster 2 erkennbar ist, befindet sich in Fahrtrichtung gesehen vor einem ebenfalls nur durch ein Sitzpolster 3 dargestellten Soziussitz 4. Der Fahrersitz 1 bildet eine Sitzmulde, zusammen mit einer Polsterschicht 5, die hinter dem Fahrersitz 1 als Rückenlehne für den Fahrer angeordnet ist. Ebenso besitzt der Sozius eine Rückenlehne, die durch eine weitere Polsterschicht 6 gebildet wird, die an einem Topcase 7 angebracht ist. Links und rechts neben dem Sozius und unterhalb des Topcases 7 schließen Motorradkoffer 8 an, die so beschaffen sind, daß sie nur unter Verwendung von Werkzeug vom Motorrad abgenommen werden können. In dieser Ansicht sichtbar ist ein Deckel 9 des linken Motorradkoffers 8, in den eine Ausnehmung 20 eingeformt ist, als Haltegriff für den Sozius, neben dem Soziussitz 4. Bei diesem Motorrad befindet sich der Fahrersitz 1 in der Gebrauchsstellung, über eine in dieser Figur nicht sichtbare Verriegelungseinrichtung verriegelt. Wie zu den folgenden Figuren erläutert, kann dieser Fahrersitz 1 um eine Scharnierachse 11 (Figur 2) hochgeschwenkt werden. Dabei befindet sich die Scharnierachse 11 unterhalb des Fahrersitzes 1, in Fahrtrichtung gesehen im wesentlichen in dessen vorderem Bereich, an einer Halteeinrichtung, die den Fahrersitz 1 mit dem Motorrad verbindet.

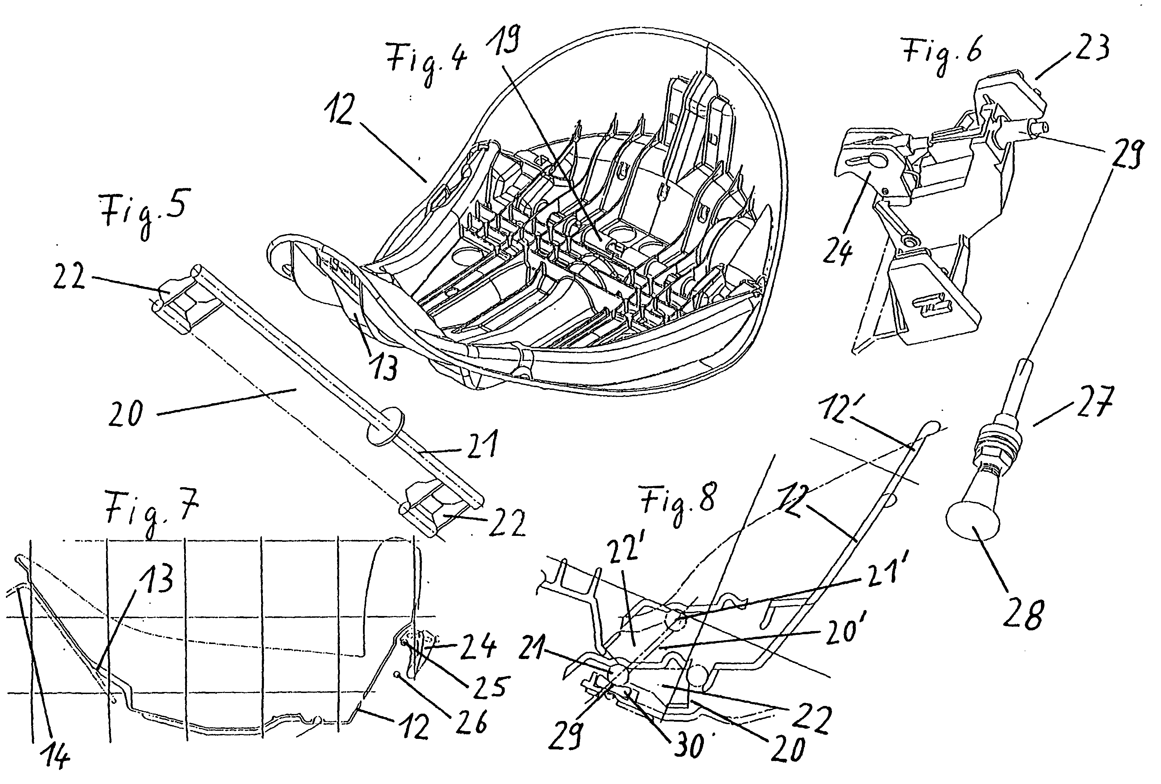

Diese Halteeinrichtung ist in den Figuren 2 und 3 dargestellt. Der in diesen Figuren nicht gezeichnete Fahrersitz 1, bestehend aus Sitzpolster 2 und Sitzschale 12 (Figur 4), ist mit einer nach unten gerichteten Seite 13 der Sitzschale 12 über einen Scharnierbügel 14 mit der als Haltebrücke 15 ausgebildeten Halteeinrichtung fest verbunden. Der Scharnierbügel 14 ist über die Scharnierachse 11 schwenkbar an der Haltebrücke 15 angebracht. Ebenfalls schwenkbar an der Haltebrücke 15 ist eine Gasdruckfeder 16 angebracht, die mit ihrem freien Ende 17 mit der Sitzschale 12 verbunden ist. Dabei können Gasdruckfeder 16 und Sitzschale 12 so zusammenwirken, daß das Verschwenken des Fahrersitzes 1 in Verbindung mit der Gasdruckfeder 16 als Übertotpunktsystem arbeitet. Das heißt, die Verbindung zwischen Gasdruckfeder 16, Scharnierbügel 14, Haltebrücke 15 und Sitzschale 12 ist so gestaltet, daß der Fahrersitz 1 sowohl in seiner Gebrauchsstellung, als auch in seiner hochgeschwenkten Position eine stabile Gleichgewichtslage einnimmt.

Zur motorradfesten Anbringung besitzt die Haltebrücke 15 etliche Befestigungsbohrungen 18 zum Bilden von reib- und/oder formschlüssigen Verbindungen mit weiteren Teilen des Motorrads.

Figur 4 zeigt die Sitzschaie 12 als räumliche Ansicht. Das Fahrersitzpolster 2 ist entfernt und so ist eine nabenartige Ausnehmung 19 in der Sitzschale 12 erkennbar, die so gestaltet ist, daß von unten her ein Verstellelement 20 (Figur 5) mit einer Drehachse 21 um diese drehbar eingeclipst werden kann. Dieses Verstellelement 20 besitzt links und rechts je einen Ansatz 22. Diese Ansätze 22 können durch Schwenken des Verstellelements 20 um die Drehachse 21 in zwei verschiedene Endstellungen gebracht werden. In einer Endstellung stützt sich die Sitzschale 12 über die Drehachse 21 an einer Verstellelementauflage 30 ab, die am Motorradheckrahmen angebracht ist. In der anderen Endstellung stützt sich die Sitzschale 12 über die Ansätze 22 der Drehachse 21 an der Verstellelementauflage 30 ab. Dadurch kann die Sitzschale 12 in ihrem hinteren Bereich in Bezug auf den Motorradheckrahmen zwei im wesentlichen in der Höhe verschiedene Positionen einnehmen. So wird durch Verschwenken des Verstellelements 20 zwischen seinen beiden Endlagen die Höhenverstelleinrichtung für den Fahrersitz 1 betätigt.

Der Fahrersitz 1 wird in seiner in Figur 1 gezeichneten Gebrauchsstellung durch eine Verriegelungseinrichtung 23 am Motorrad fixiert (Figur 6). Dazu besitzt die Verriegelungseinrichtung 23 unter anderem einen Schloßhaken 24, der selbsttätig jeweils einen Haltebügel 25 oder 26 umgreift, abhängig von der jeweiligen Endstellung des Verstellelements 20. Die Haltebügel 25, 26 sind an der Sitzschale 12 angebracht (Figur 7).

In Figur 6 ist die Verriegelungseinrichtung 23 dargestellt. Der Schloßhaken 24 wird über eine Betätigungseinrichtung 27 zum Freigeben des jeweiligen Haltebügels 25 oder 26 bewegt. Die Betätigungseinrichtung 27 besteht aus einem Betätigungselement 28, das über einen Bowdenzug 29 mit dem Schloßhaken 24 verbunden ist. Durch die Bowdenzugverbindung zwischen Betätigungselement 28 und Schloßhaken 24 kann die Betätigungseinrichtung 27 irgendwo am Motorrad, griffgünstig für den Fahrer, untergebracht werden. Zum Beispiel in Figur 1 nicht sichtbar im Motorradkoffer 8, weshalb die Betätigungseinrichtung 27 nicht abschließbar gestaltet werden muß, da der Motorradkoffer 8 ein Schließsystem besitzt. Angebracht ist die Verriegelungseinrichtung 23 am Motorrad in Fahrtrichtung gesehen im wesentlichen unterhalb des hinteren Bereichs des Fahrersitzes 1.

Figur 7 zeigt den Schloßhaken 24, eingerastet im Haltebügel 25, der dann mit dem Schloßhaken 24 in Eingriff kommt, wenn das Verstellelement 20 in seiner einen Endposition ist, in der sich die Sitzschale 12 über die Drehachse 21 am Motorradheckrahmen abstützt. Dies ist die niedrigere Sitzposition für den Fahrer auf dem Fahrersitz 1. Wird das Verstellelement 20 in seine andere Endposition um die Drehachse 21 verschwenkt, so stützt sich die Sitzschale 12 über die Drehachse 21 und die Ansätze 22 am Motorradheckrahmen ab, die Sitzposition für den Fahrer auf dem Fahrersitz 1 ist deshalb höher und der Schloßhaken 24 verriegelt den Fahrersitz 1 über den Haltebügel 26, der unterhalb des Haltebügels 25 an der Sitzschale 12 angebracht ist.

Figur 8 zeigt das Verstellelement 20,20' in seiner einen und in seiner anderen Endposition. Ebenso sind Teile der Sitzschale 12,12' in der niedrigeren und in der höheren Sitzposition für den Fahrer gezeichnet. Das Verstellelement 20,20' stützt sich immer an der selben Abstützstelle 29 am Motorradheckrahmen ab, an der eine elastische Verstellelementauflage 30 angebracht ist. In seiner einen Endposition ist das schwenkbare Verstellelement 20 mit seinen Ansätzen 22 nach hinten verschwenkt, so daß sich die Drehachse 21 des Verstellelements 20 an der Abstützstelle 29 befindet. Die Sitzschale 12 und somit der Fahrersitz 1 nimmt dadurch die niedrigere Sitzposition für den Fahrer ein. Die höhere Sitzposition für den Fahrer entsteht, wenn sich das Verstellelement 20' in seiner anderen Endposition befindet. In dieser sind die Ansätze 22' des Verstellelements 20' nach vorne um die Drehachse 21' verschwenkt und das Verstellelement 20' stützt sich an der Abstützstelle 29 mit den Ansätzen 22' ab. Dadurch entsteht die höhere Position für die Sitzschale 12'.

## Patentansprüche

1. Motorrad mit einer Sitzeinrichtung mit mindestens einem für einen Fahrer vorgesehenen Sitz (1), der eine Sitzschale (12, 12') und ein an der Sitzschale (12,12') angebrachtes Sitzpolster (2) aufweist, wobei
• der Sitz (1) über eine Halteeinrichtung, die auch ein Scharnier bildet und eine Gasdruckfeder (16) umfasst, am Motorrad befestigt ist und zwischen einer unteren Schwenkstellung, die eine Gebrauchsstellung ist, und einer nach oben verschwenkten Stellung verschwenkbar ist und
• der Sitz (1), wenn er sich in der nach oben verschwenkten Stellung befindet, in der nach oben verschwenkten Stellung gehalten wird,
**dadurch gekennzeichnet,**
**dass** die Sitzeinrichtung zusätzlich eine separate Verriegelungseinrichtung (23) umfasst, mit der der Sitz (1) in der Gebrauchsstellung gegen Verschwenken verriegelbar ist und die zum Verschwenken entriegelbar ist.

2. Motorrad nach Anspruch 1, **dadurch gekennzeichnet, daß** die Sitzeinrichtung für einen Fahrer und einen Sozius ausgebildet ist und daß der Sitz (1) für den Fahrer über das Scharnier hochschwenkbar am Motorrad befestigt ist, wobei der Sitz (1) um eine Scharnierachse (11) geschwenkt wird, die in Fahrtrichtung gesehen im wesentlichen im vorderen Bereich unterhalb des Sitzes (1) an der Halteeinrichtung angebracht ist.

3. Motorrad nach einem der Ansprüche 1 oder 2, **dadurch gekennzeichnet, daß** die Verriegelungseinrichtung (23) in Fahrtrichtung gesehen im wesentlichen unterhalb des hinteren Bereichs des Sitzes (1) fahrzeugfest angebracht ist.

4. Motorrad nach einem der Ansprüche 1 bis 3, **dadurch gekennzeichnet, daß** die Sitzeinrichtung mit einer Höhenverstelleinrichtung für den Sitz (1) versehen ist, die ein am Sitz (1) angebrachtes Verstellelement (20,20') umfaßt, durch das ein unterschiedlich großer Abstand zwischen Sitzschale (12,12') und einer an einem Motorradheckrahmen angebrachten Verstellelementauflage (30) in Gebrauchsstellung des Sitzes (1) festgelegt werden kann.

5. Motorrad nach Anspruch 4, **dadurch gekennzeichnet, daß** durch das Verstellelement (20,20') für mindestens zwei verschiedene Sitzpositionen mindestens zwei unterschiedlich große Abstände zwischen Sitz (1) und Motorradheckrahmen in Gebrauchsstellung des Sitzes (1) festgelegt werden können und daß am Sitz (1) für jede Sitzposition jeweils ein Haltebügel (25,26) angebracht ist, zum Eingriff eines Schloßhakens (24) der Verriegelungseinrichtung (23).

6. Motorrad nach einem der Ansprüche 1 bis 5, **dadurch gekennzeichnet, daß** die Verriegelungseinrichtung (23) für den Sitz (1) über eine Betätigungseinrichtung (27) zum Entriegeln betätigt wird und daß Verriegelungseinrichtung (23) und Betätigungseinrichtung (27) durch einen Bowdenzug (29) miteinander verbunden sind.

7. Motorrad nach einem der Ansprüche 1 bis 6, **dadurch gekennzeichnet, daß** die Betätigungseinrichtung (27) in einem Motorradkoffer (8) untergebracht ist.

8. Motorrad nach einem der Ansprüche 1 bis 7, **dadurch gekennzeichnet, daß** die Gasdruckfeder (16) und die Sitzschale (12, 12') ein Übertotpunktsystem bilden, wobei die Gasdruckfeder (16) den Sitz (1) sowohl in der Gebrauchsstellung als auch in der nach oben verschwenkten Stellung stabil hält.

## Claims

1. A motorcycle with a seat device comprising at least one seat (1) for the driver and consisting of a seat basin (12, 12') and upholstery (2) fitted on the basin (12, 12'), wherein
· the seat (1) is fastened to the motorcycle by a retaining device, also in the form of a hinge and comprising a pneumatic spring (16), and is pivotable between a bottom or operative position and a top position and
· the seat (1), when in the top pivoted position, is held therein,
**characterised in that**
the seat device additionally comprises a separate locking device (23) for preventing the seat (1) from rotating when in the operative position, the device being unlockable so that the seat can rotate.

2. A motorcycle according to claim 1, **characterised in that** the seat device is designed for a driver and a pillion passengerand the driver's seat (1) is fastened to the motorcycle so that it can be swung up via the hinge, wherein the seat (1) is pivoted around a hinge pin (11) which, considered in the direction of travel, is mounted on the retaining device substantially in the front region under the seat (1).

3. A motorcycle according to claim 1 or 2, **characterised in that** the locking device (23), considered in the direction of travel, is fastened to the vehicle substantially under the rear region of the seat (1).

4. A motorcycle according to any of claims 1 to 3, **characterised in that** the seat device is provided with a means for vertically adjusting the seat (1) and comprising an adjusting element (20, 20') attached to the seat (1) and adapted, when the seat (1) is in the operating position, to fix a variable distance between the seat basin (12, 12') and an adjusting-element support (30) on the rear frame of the motorcycle.

5. A motorcycle according to claim 4, **characterised in that** the adjusting element (20, 20') can fix at least two different distances between the seat (1) and the rear frame of the motorcycle for at least two different sitting positions when the seat (1) is in the operative position, and a shackle (25, 26) for each seat position is attached to the seat for engagement of a hook (24) on the locking device (23).

6. A motorcycle according to any of claims 1 to 5, **characterised in that** the locking device (23) for the seat (1) is unlocked by an actuating device (27), and the locking device (23) and the actuating device (27) are connected by a Bowden cable (29).

7. A motorcycle according to any of claims 1 to 6, **characterised in that** the actuating device (27) is disposed in a luggage compartment (8) on the motorcycle.

8. A motorcycle according to any of claims 1 to 7, **characterised in that** the pneumatic spring (16) and the seat basin (12, 12') form an over dead-centre system, wherein the pneumatic spring (16) holds the seat (1) firmly both in the operating position and in the upwardly pivoted position.

## Revendications

1. Motocyclette comportant une installation de siège ayant au moins un siège (1) pour le conducteur, ce siège comprenant une coquille (12, 12') et un rembourrage de siège (2) équipant la coquille (12, 12') ; motocyclette dont :
- le siège (1) est fixé à la motocyclette par une installation de maintien qui forme également une charnière et comprend un ressort à gaz (16) et peut basculer entre une position de basculement basse qui est la position d'utilisation et une position basculée relevée ; et
- le siège (1) lorsqu'il se trouve dans sa position relevée est tenu dans cette position relevée,
**caractérisée en ce que**
l'installation de siège comprend en outre une installation de verrouillage distincte (23) avec laquelle le siège (1) peut être verrouillé en basculement dans la position d'utilisation et cette position peut être déverrouillée pour le basculement.

2. Motocyclette selon la revendication 1,
**caractérisée en ce que**
l'installation de siège est conçue pour un conducteur et un passager et le siège (1) du conducteur est fixé à la motocyclette par une charnière de manière à pouvoir être relevé ;
le siège (1) pouvant être basculé autour de l'axe (11) d'une charnière, et cet axe se trouve lorsqu'on regarde dans la direction de déplacement, principalement dans la zone avant sous le siège (1) au niveau de l'installation de maintien.

3. Motocyclette selon l'une des revendications 1 ou 2,
**caractérisée en ce que**
l'installation de verrouillage (23), vue dans la direction de déplacement, se trouve essentiellement en dessous de la zone arrière du siège (1), installée de manière solidaire au véhicule.

4. Motocyclette selon l'une des revendications 1 à 3,
**caractérisée en ce que**
l'installation de siège comporte une installation de réglage en hauteur du siège (1), cette installation comportant un élément de réglage (20, 20') équipant le siège (1) et qui permet de fixer une distance différente entre la coquille de siège (12, 12') et un appui d'élément de réglage (30) équipant le châssis arrière de la motocyclette, pour la position d'utilisation du siège (1).

5. Motocyclette selon la revendication 4,
**caractérisée en ce que**
l'élément de réglage (20, 20') permet de fixer pour au moins deux positions d'assise différentes au moins deux distances différentes entre le siège (1) et le châssis arrière de la motocyclette en position d'utilisation du siège (1) ; et
pour chaque position d'assise, le siège (1) comporte un étrier de maintien (25, 26) pour venir en prise avec un crochet de serrure (24) de l'installation de verrouillage (23).

6. Motocyclette selon l'une des revendications 1 à 5,
**caractérisée en ce que**
l'installation de verrouillage (23) est actionnée pour le déverrouillage du siège (1) par une installation d'actionnement (27) ; et
l'installation de verrouillage (23) et l'installation d'actionnement (27) sont reliées par un câble Bowden (29).

7. Motocyclette selon l'une des revendications 1 à 6,
**caractérisée en ce que**
l'installation d'actionnement (27) est logée dans un coffre (8) de la motocyclette.

8. Motocyclette selon l'une des revendications 1 à 7,
**caractérisée en ce que**
le ressort à gaz (16) et la coquille de siège (12, 12') forment un système métastable, le ressort à gaz (16) maintenant le siège (1) à la fois en position d'utilisation et en position relevée.
